# FASCICULE DE BREVET EUROPEEN

(11) **EP 2 833 267 B1**
(45) Date de publication et mention de la délivrance du brevet: **25.09.2019**
(21) Numéro de dépôt: 14178612.9
(22) Date de dépôt: 25.07.2014
(51) Int. Cl.: G06F 11/34, H04L 12/26, H04L 12/24, G06F 11/32

(54) **Recherche de limite de performance d'une infrastructure informatique**
Erforschung der Leistungsgrenze einer IT-Infrastruktur
Search for the performance limits of a computing infrastructure

(30) Priorité: 30.07.2013 FR 1357548
(43) Date de publication de la demande: 04.02.2015
(73) Titulaire: BULL SAS, 78340 Les Clayes sous Bois (FR)
(72) Inventeur: AIELLO, Damien, 38500 LA BUISSE (FR); DEMEILLIEZ, Bruno, 38410 SAINT-MARTIN D'URIAGE (FR); MENIGOT, Gilles, 38610 VENON (FR)
(74) Mandataire: A.P.I. Conseil

(56) Documents cités:
- US-A1- 2005 216 234
- US-A1- 2008 221 941
- US-B1- 6 446 120

## Description

La présente invention concerne le domaine des tests de performance d'infrastructures informatiques.

De telles infrastructures (ou architectures) informatiques sont par exemple des applications « n-tiers » avec un serveur de présentation, un serveur métier et un serveur de persistance, ou encore des calculateurs hautes performances, généralement désignés sous leur appellation anglo-saxonne « *clusters* » HPC (HPC étant le sigle de « *High Performance Computing* »). Les infrastructures peuvent comporter un ensemble de serveurs (par exemple Web).

Les tests (ou mesures) de performance (« Benchmark » en terminologie anglo-saxonne) peuvent avoir pour objectif de résoudre des problèmes de performance se produisant uniquement en charge (c'est-à-dire en fonctionnement avec un grand nombre d'utilisateurs ou traitements automatisés), de dimensionner une infrastructure nécessaire pour une application en fonction d'une utilisation donnée, de valider les performances, l'endurance, la robustesse d'une application, de comparer des évolutions (briques logicielles, version d'application, optimisations, etc.), ou autre.

Les applications (ou logiciels) de test de performance permettent de simuler plusieurs utilisateurs simultanément. Par exemple, pour une infrastructure informatique d'application Web (un réseau de serveurs Web), l'application de test est capable d'envoyer vers l'infrastructure un très grand nombre de requêtes (par exemple au format HTML), comme si elles provenaient d'utilisateurs simultanés différents.

Ces applications permettent de créer un ou plusieurs scénarios de test en choisissant une ou plusieurs requêtes à faire exécuter par l'infrastructure testée et en choisissant un débit de requêtes pour chaque scénario.

Les applications de test effectuent un certain nombre de mesures (temps de réponse de l'infrastructure, taux d'erreurs, ou autre) et génèrent un rapport de test.

Le document US2005/216234 décrit un procédé de test de charge d'un serveur web, dans lequel la charge maximale du serveur est déterminée en augmentant le taux de requêtes jusqu'à ce que le serveur ne puisse plus répondre.

De manière générale, un test de performance d'infrastructure informatique, peut se dérouler en plusieurs étapes.

Dans une première étape, la stratégie de test est définie, avec notamment :
- la définition du contexte technique de l'infrastructure testée,
- le choix d'un ou plusieurs scénarios et la pondération de ces scénarios (c'est-à-dire la définition de l'importance relative des uns par rapport aux autres),
- la détermination de la volumétrie cible (c'est-à-dire le débit de requêtes souhaité pour le test),
- la définition de l'infrastructure testée,
- la définition des prérequis.

Ensuite, l'environnement du test est mis en place. Il s'agit par exemple d'appliquer une certaine configuration à l'infrastructure informatique testée pour pouvoir tester cette configuration en particulier.

Les scénarios de test sont ensuite capturés au moyen d'applications de test puis modifiés pour être paramétrables. Ensuite, à partir de ces définitions, les jeux d'instructions d'injection sont construits. Il s'agit de définir les paramètres des requêtes à envoyer vers l'infrastructure à tester pour mettre en oeuvre les scénarios (par exemple sous forme de fichier CSV, sigle de *« Comma-separated values* », ou d'un export d'une base de données).

Pour effectuer les mesures de performance, il peut être nécessaire de développer des sondes de mesure spécifiques à une grandeur particulière.

Des scripts d'ordonnancement préexistants sont ensuite adaptés ou complétés pour exécuter de façon chronologique les tâches nécessaires à la mise en oeuvre des scénarios selon les jeux d'injection.

Enfin, des tirs sont exécutés lors d'une « *campagne de test »* et les résultats sont mesurés et analysés pour générer un rapport.

Une campagne de test comporte un ensemble de tirs qui sont effectués dans une période de temps définie. Les tirs sont lancés par un ordonnanceur. Un tir peut se caractériser par un niveau d'injection et une durée ainsi qu'un ensemble d'opérations qui sont effectuées durant l'injection.

Une analyse synthétique est effectuée en fin de tir à partir de laquelle sont constatés les résultats de la mesure de performance et déterminées les caractéristiques des tirs suivants. L'analyse peut aussi être effectuée pendant le tir.

Les campagnes de test peuvent avoir pour objectif de déterminer les limites de performance des infrastructures informatiques. Il peut par exemple s'agir de déterminer les limites de charge d'une chaîne applicative.

A cet effet, il existe un besoin pour outil industriel permettant une détermination optimale de cette limite, dans des temps compatibles avec le développement industriel des infrastructures informatiques.

Ainsi, il est possible de déterminer la limite d'une infrastructure informatique, et la charge jusqu'à laquelle elle est capable de fonctionner.

La présente invention s'inscrit dans ce cadre.

Un **premier aspect** de l'invention concerne un procédé de recherche de limite de performance d'infrastructure informatique selon la revendication 1.

Un procédé selon le premier aspect permet de déterminer, de manière automatisée et optimale les limites de performance d'une infrastructure informatique. Par exemple, il est possible de déterminer les limites de charge d'une chaîne applicative.

La détermination peut se faire dans des temps optimaux par rapport au cycle de production industrielle des infrastructures informatiques.

Plutôt que de procéder par des itérations « à l'aveugle » en choisissant des valeurs de paramètre de mesure pour vérifier si une performance donnée est atteinte, un procédé selon le premier aspect permet de lancer la recherche et attendre le résultat, sans avoir à relancer par un utilisateur des campagnes de test.

Il en résulte donc des résultats plus précis et obtenus plus rapidement. Le cycle de production industrielle de l'infrastructure s'en trouve réduit.

Par exemple, ladite étape de première détermination de ladite marge de modification est mise en oeuvre en fonction d'un résultat de ladite étape de première comparaison.

Ainsi, il est possible de modifier la valeur courante du paramètre de mesure en fonction de chaque détermination itérative d'un résultat de mesure.

Par exemple, dès qu'un résultat de mesure est en dehors de la tolérance définie par la donnée de tolérance, la recherche peut être interrompue pour déterminer s'il y a une marge de modification de la valeur courante du paramètre de mesure, et le cas échéant, lancer une nouvelle mesure avec une nouvelle valeur de paramètre de mesure.

Ainsi, le procédé peut en outre comporter, en fonction d'un résultat de ladite étape première de comparaison, une étape d'arrêt de la mesure courante.

Il est aussi possible de déterminer la marge de modification si durant les mesures effectuées, aucun résultat n'a été détecté en dehors de la tolérance définie par la donnée de tolérance

Par exemple, le procédé comporte en outre, en fonction de ladite première détermination de ladite marge de modification, au moins une étape de validation de limite de performance.

La ou les étapes de validation de performance permettent d'augmenter la fiabilité d'un résultat obtenu.

Il est ainsi possible de vérifier qu'une répétition des mesures permet d'obtenir la même limite de performance.

La validation peut reprendre la dernière valeur de paramètre de mesure pour valider la limite de performance déterminée.

La répétition des mesures peut se faire dans les mêmes conditions qu'une mesure précédente ou dans des conditions différentes.

Ainsi, le procédé peut comporter au moins une première étape de validation comprenant les étapes suivantes :
- de deuxième lancement d'une mesure courante de performance de ladite infrastructure informatique, en fonction de la dernière valeur courante dudit au moins un paramètre de mesure de performance,
- de deuxième détermination itérative d'au moins un résultat de mesure de performance de ladite infrastructure informatique, ledit au moins un résultat de mesure étant relatif à au moins un paramètre de performance d'infrastructure,
- de deuxième comparaison dudit au moins un résultat de mesure à au moins une donnée de tolérance pour ledit paramètre de performance d'infrastructure,
- de deuxième détermination d'une marge de modification de ladite valeur courante dudit au moins un paramètre de mesure de performance, et,
en fonction de ladite première détermination de ladite marge de modification, les étapes :
- de réexécution des étapes selon l'une des revendications 1 à 4, ou
- de deuxième arrêt de ladite recherche de limite de performance, ladite limite de performance étant déterminée à partir de ladite valeur courante validée dudit au moins un paramètre de mesure de performance.

Par exemple, une étape de validation peut comporter la mise en oeuvre d'une mesure d'endurance avec une valeur de paramètre de mesure donnée.

Ainsi, le procédé peut en outre comporter, préalablement à ladite deuxième étape d'arrêt au moins une deuxième étape de validation comprenant une réexécution desdites deuxièmes étapes pour tester une endurance de ladite infrastructure informatique.

La validation d'endurance peut être consécutive à une validation par réexécution du procédé de détermination de limite de performance.

Le procédé peut en outre comporter une étape de mise à jour d'un fichier de suivi de ladite recherche de limite de performance en fonction d'au moins l'un des événements suivants :
- la modification d'une valeur courante dudit au moins un paramètre de mesure de performance,
- la détermination d'au moins une valeur courante à valider.

Ainsi, des analyses ultérieures de la recherche de limite peuvent être conduites. En outre, il est possible de suivre en temps réel cette recherche, pour éventuellement y mettre fin.

Le procédé peut en outre comporter une étape d'arrêt de mesure de performance :
- préalablement à une modification d'une valeur courante dudit au moins un paramètre de mesure de performance, et/ou
- suite à un dépassement de tolérance pour ledit paramètre de performance de ladite infrastructure informatique, et/ou
- suite à une détermination d'une marge de modification de ladite valeur courante dudit au moins un paramètre de mesure de performance.

Ainsi, le procédé de recherche de limite de performance peut se dérouler sur une durée moins importante.

Par exemple, ledit au moins un paramètre de performance d'infrastructure est relatif à au moins l'un :
- d'un résultat d'au moins une requête exécutée par ladite infrastructure informatique en cours de mesure,
- d'une utilisation de ressources informatiques.

Par exemple, ledit paramètre de mesure de performance est un débit d'injection de requêtes à exécuter par ladite infrastructure informatique.

Les paramètres ci-dessus sont adaptés à la détermination de limite de performances d'infrastructures informatiques.

Un **deuxième aspect** de l'invention concerne un programme d'ordinateur ainsi qu'un produit programme d'ordinateur et un support de stockage pour de tels programme et produit, permettant la mise en oeuvre d'un procédé selon le premier aspect de l'invention, lorsque le programme est stocké dans une mémoire d'un dispositif de recherche de limite de performance d'une infrastructure informatique et exécuté par un processeur d'un tel dispositif.

Un **troisième aspect** de l'invention concerne un dispositif de recherche de limite de performance d'une infrastructure informatique selon la revendication 10.

D'autres caractéristiques et avantages de l'invention apparaîtront à la lecture de la présente description détaillée qui suit, à titre d'exemple non limitatif, et des figures annexées parmi lesquelles :
- la **figure 1** illustre un contexte général de mise en oeuvre de modes de réalisation ;
- les **figures 2a-2c** sont des organigrammes d'étapes mises en oeuvre selon des modes de réalisation ; et
- la **figure 3** illustre schématiquement un dispositif selon des modes de réalisation.

Dans la description qui suit, il est présenté un outil pour rechercher une limite de performance d'une infrastructure informatique. Des boucles de lancement de mesures et de vérifications (ou validation) automatiques sont mises en oeuvre.

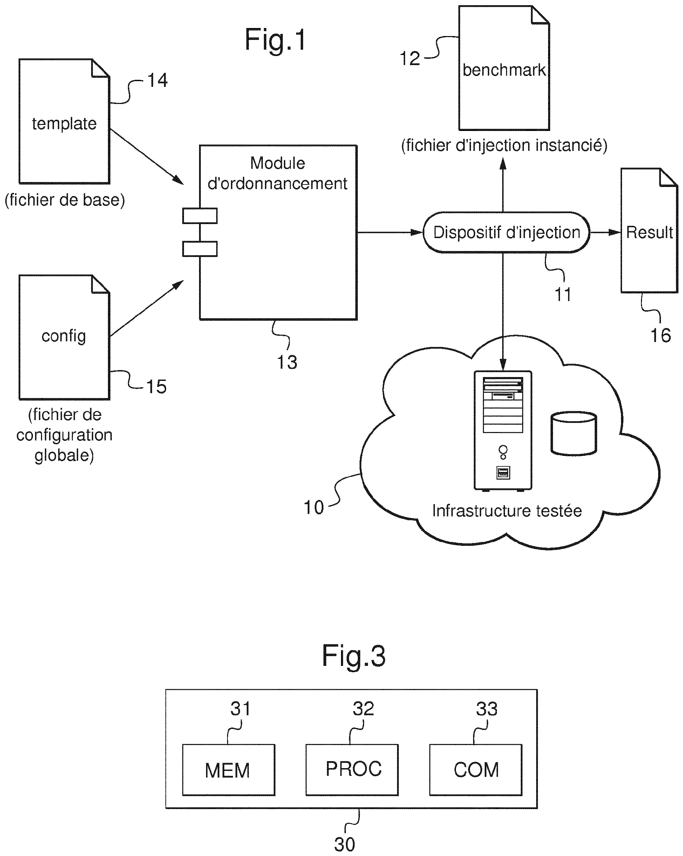

La **figure 1** illustre un contexte général de mise en oeuvre de modes de réalisation d'une recherche de limite de performance.

Une infrastructure informatique 10, qui met en oeuvre une ou plusieurs applications logicielles est testée en vue de rechercher sa limite de performance. Cette infrastructure est par exemple une application n-tiers. Il est possible d'envisager d'autres infrastructures informatiques.

A cet effet, un dispositif d'injection 11, mettant en oeuvre une application de test, envoie vers l'infrastructure 10 un ensemble de requêtes (« tir ») que l'infrastructure exécute. Le dispositif reçoit par ailleurs de l'infrastructure des résultats d'exécution de ces requêtes et des données de mesure de performance.

Pour exécuter le tir, le dispositif d'injection reçoit ou lit un fichier d'injection instancié 12 « *benchmark ».* Ce fichier d'injection est généré par un module d'ordonnancement 13. Ce module d'ordonnancement peut faire partie du dispositif d'injection ou faire partie d'un autre dispositif spécifiquement dédié à la génération du fichier d'injection 12.

Pour générer le fichier d'injection 12, le module d'ordonnancement utilise un fichier de base 14 « *template »* et un fichier de configuration 15 *« config ».*

Le module d'ordonnancement exécute un script d'ordonnancement, par exemple écrit en langage Bash, qui automatise les tâches liées à la mesure de performance (Benchmark) d'une application informatique. Ce script peut comporter une ou plusieurs des étapes suivantes, implémentées sous forme de fonctions, notamment :
- configurer le module d'injection pour exécuter le tir,
- rediriger les requêtes vers les éléments (matériels ou logiciels) de l'infrastructure),
- copier, ou calculer, les paramètres d'injection dans le fichier d'injection,
- remise à zéro du système, notamment de la base de données, dans un état connu,
- arrêter les sondes de mesure,
- arrêter les services de l'infrastructure informatique,
- démarrer les services de l'infrastructure informatique,
- démarrer les sondes de mesure,
- injecter les requêtes vers l'infrastructure informatique,
- arrêter les services,
- arrêter les sondes,
- collecter les données de mesure,
- démarrer les services,
- analyser les données de mesure,
- archiver les données de mesure.

L'étape « injecter » appelle l'exécution du fichier d'injection par le dispositif d'injection.

L'étape « copier » comporte le calcul de paramètres nécessaires à la génération du fichier d'injection.

Lors de cette étape, le module d'ordonnancement lit le fichier de configuration 15 et prépare le fichier d'injection 12 à destination du dispositif d'injection. Pour chaque scénario dans le fichier de configuration, des variables d'injection sont calculées afin de les intégrer au fichier d'injection et permettre au dispositif d'injection de cadencer les instructions envoyées vers l'infrastructure informatique testée.

Lors de la campagne de tir, le dispositif d'injection génère des résultats de mesure. Il s'agit par exemple du temps de réponse moyen de l'infrastructure testée en fonction de chaque type de requête envoyée, l'écart-type des temps de réponse, le temps maximum, le temps minimum, les déciles, le nombre de requêtes traitées, le nombre de requêtes en échec et/ou en succès, des messages d'erreur ou autre.

Ces résultats sont stockés au fur et à mesure dans un fichier de résultat de mesure 16.

Afin de surveiller le déroulement du tir, le dispositif d'injection accède régulièrement au fichier de résultat de mesure. Le dispositif d'injection lit et stocke de manière régulière les résultats de mesure dans le fichier 16.

D'une manière générale, afin de rechercher automatiquement la limite de performance de l'infrastructure (par exemple les limites d'une chaîne applicative qu'elle met en oeuvre), un premier tir est lancé, avec un paramètre de mesure de performance paramétrable, via un fichier de configuration (par exemple le fichier de configuration 15). Par exemple, le paramètre est le débit d'injection. En temps réel, le résultat du tir est analysé (par exemple, on vérifie les consommations des ressources des machines de la chaîne, les résultats des requêtes tels que notamment les temps de réponse, les codes de retour, les valeurs retournées, ou autre).

Des seuils de tolérances sont fixés dans le fichier de configuration (par exemple pour chaque dispositif de l'infrastructure et/ou pour chaque ressource). Ces seuils de tolérance permettent de déterminer si l'infrastructure ne dévie pas d'un comportement attendu ou ne satisfait pas des performances voulues.

Lorsque les résultats de mesure ne satisfont pas aux tolérances définies, il est possible d'arrêter le tir en cours et de calculer un nouveau paramètre de mesure de performance (par exemple un débit plus faible) si une marge de modification est possible, et de lancer le tir avec ce nouveau paramètre. Ce tir est analysé et surveillé de la même façon que le précédent.

Afin de garder une trace des éventuels écarts par rapport aux tolérances, des alertes peuvent être émises vers un utilisateur ou être stockées dans un fichier de suivi.

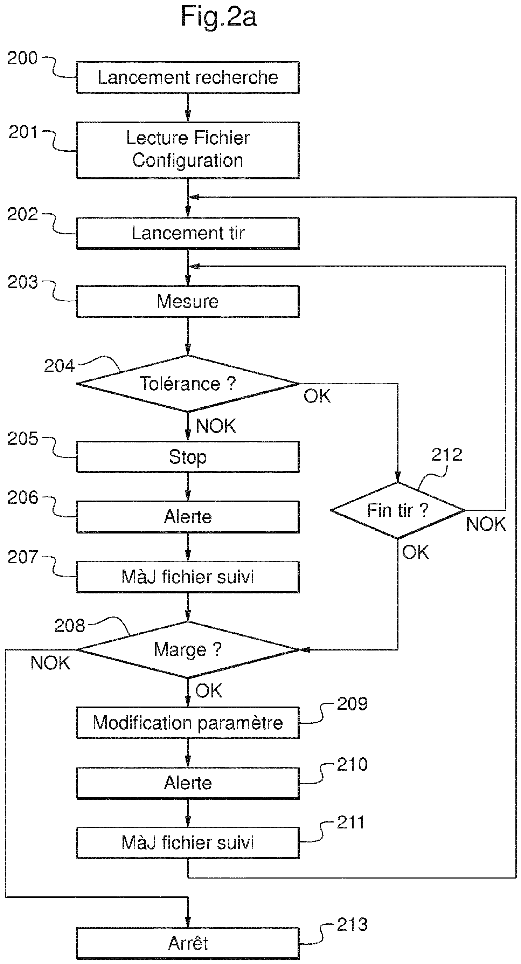

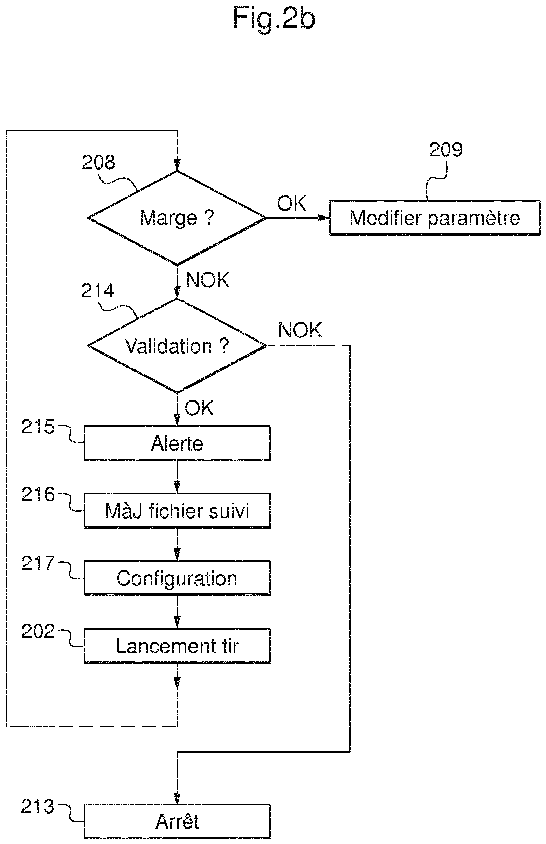

Des étapes d'un procédé de surveillance selon des modes de réalisation sont présentées en référence à l'organigramme de la **Figure 2a****.** Ces étapes sont par exemple mises en oeuvre par un dispositif d'injection.

Lors d'une première étape 200, la recherche de limite de performance est lancée. Ce lancement peut comporter l'ouverture d'un fichier comportant une liste de paramètres de performance à analyser, des tolérances par rapport à ces paramètres (par exemple des seuils) ou autre. Lors de cette étape, il est possible d'initialiser un fichier de suivi pour stocker des éléments relatifs à l'évolution de la recherche au cours de celle-ci

Le fichier de configuration est lu lors d'une étape 201 qui permet d'initialiser un tir d'injection, qui lui est lancé lors de l'étape 202. Le tir est lancé avec une ou plusieurs valeurs de paramètres initiales qui peuvent être définies dans le fichier de configuration. Ces valeurs peuvent aussi être des valeurs par défaut. Par exemple, il est possible de partir d'une valeur maximale pour l'abaisser au fur et à mesure jusqu'à ce que l'infrastructure réponde conformément à un comportement attendu. Par exemple encore, il est possible de partir d'une valeur minimale, et de l'augmenter au fur et à mesure jusqu'à ce que l'infrastructure ne réponde plus conformément à ce comportement.

Durant le déroulement du tir, des résultats de mesure sont régulièrement obtenus lors d'une étape 203. Ces résultats de mesure sont par exemple des temps de réponse à des requêtes, des messages d'erreur, ou autre.

A partir de ces résultats, un ou plusieurs paramètres de performance sont déterminés. Par exemple, il s'agit d'un temps de réponse moyen à des requêtes, un taux de messages d'erreurs ou autre. Ce ou ces paramètres de performance sont ensuite testés lors de l'étape 204 par rapport à des tolérances définies dans le fichier de configuration. Par exemple, il s'agit de vérifier que les résultats de mesure sont supérieurs (ou inférieurs) à des seuils de tolérance.

Si l'infrastructure ne répond pas comme attendu (NOK), par exemple si un paramètre de performance dépasse un seuil, le tir est arrêté lors d'une étape 205. Il est en outre possible d'émettre un message d'alerte lors d'une étape 206 vers un utilisateur (un courriel, un message graphique, un son ou autre). Par exemple encore, il est possible d'inscrire cet événement dans le fichier de suivi dans une étape 207 de mise à jour de celui-ci.

Étant donné que l'infrastructure n'a pas réagi comme attendu, au moins un paramètre du tir (paramètre de mesure) doit être modifié. Ainsi, il est vérifié lors d'une étape 208, s'il y a une marge de modification possible sur un paramètre de mesure. Par exemple, si le tir a été lancé avec un débit de requête donné, il est vérifié s'il est possible de le diminuer. Pour d'autres paramètres, il est possible de vérifier s'il est possible de les augmenter.

S'il est déterminé qu'une marge de modification existe (OK), le paramètre de mesure en question est modifié lors d'une étape 209. Une alerte peut une nouvelle fois être émise lors d'une étape 210 (courriel, message graphique, alerte sonore ou autre). Le fichier de suivi peut aussi être mis à jour lors d'une étape 211.

Une fois la modification effectuée (et éventuellement l'alerte et la mise à jour effectuées), le processus retourne à l'étape 202 pour relancer le tir avec le nouveau paramètre calculé.

Si, lors de l'étape 204, il est déterminé que les paramètres de performance sont conformes aux tolérances (OK), les mesures suivent leur cours, jusqu'à la fin du tir qui est testée lors de l'étape 212. Tant que le tir n'est pas terminé (NOK), les mesures (et la vérification 204) sont réalisées. A la fin du tir (OK), l'étape 208 est exécutée. Il peut alors être vérifié s'il est possible, par exemple, d'augmenter le débit d'injection et voir si l'infrastructure peut encore fonctionner correctement avec un débit d'injection supérieur.

Si lors de l'étape 208, il est déterminé qu'il n'y a pas de marge de modification de paramètre de mesure, la recherche est arrêtée lors de l'étape 213. Par exemple, une alerte peut être émise vers un utilisateur (message électronique, alerte graphique, sonore, ou autre).

Le fichier de suivi peut être complété et mis en forme pour un traitement ultérieur, comme par exemple une analyse de la recherche.

La valeur courante du ou des paramètres de mesure est alors utilisée pour déterminer la limite de performance de l'infrastructure. Par exemple, il s'agit du dernier débit d'injection utilisé.

Afin de s'assurer de la pertinence de la limite déterminée, un ou plusieurs mécanismes de validation peuvent être mis en oeuvre.De telles validations sont illustrées par la **figue 2b.**

Le processus de validation peut être mis en oeuvre suite à l'exécution de l'étape 208 de détermination d'une marge de modification de paramètre de mesure. S'il est déterminé qu'il n'y a pas de marge de modification (NOK), avant de conclure à l'atteinte de la limite de performance, la valeur courante du paramètre de mesure peut être validée par une exécution d'étapes de validation.

Une étape de décision 214 peut être exécutée, visant à déterminer si la validation doit être mise en oeuvre. Par exemple, plusieurs validations peuvent être mises en oeuvre. Cette étape peut permettre de vérifier que toutes les validations ont été mises en oeuvre. En particulier, deux types de validation peuvent être mis en oeuvre. Une validation peut consister à exécuter une nouvelle fois le tir avec le dernier paramètre de mesure afin de vérifier que l'infrastructure réagit correctement une nouvelle fois. Une autre validation peut consister en un test d'endurance dans lequel l'infrastructure est soumise à une charge plus importante ou à une mesure sur une plus longue durée.

Si lors de l'étape 214, il est déterminé qu'une validation doit être mise en oeuvre (OK), une étape d'alerte peut être exécutée pour avertir un utilisateur, le fichier de suivi peut aussi être mis à jour lors d'une étape 216. Un nouveau tir est configuré lors de l'étape 217. Comme évoqué ci-dessus, en fonction du type de validation mis en oeuvre, il peut s'agir de configurer la mesure avec le ou les derniers paramètres de mesure courant, ou de paramétrer un test d'endurance.

Une fois le tir paramétré, le processus retourne à l'étape 202 (de la figure 2a) pour lancer le tir.

Le processus peut alors revenir à l'étape 214 (suite à l'étape 208) et une nouvelle validation peut être mise en oeuvre.

Si lors de l'étape 214 il n'est pas décidé de mettre en oeuvre une validation, le processus passe à l'étape 213 déjà décrite.

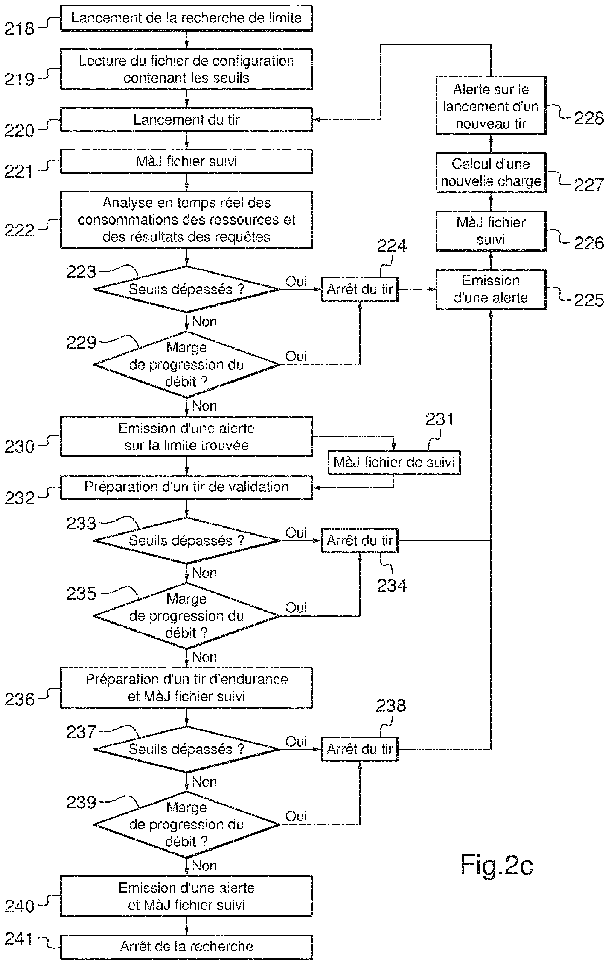

La **figure 2c** est un organigramme d'étapes mises en oeuvre dans un mode de réalisation où une première validation est exécutée, suivie d'un tir d'endurance.

La recherche de limite de performance est lancée lors de l'étape 218. Le fichier de configuration est lu lors de l'étape 219, afin, notamment, de lire des seuils de performance à ne pas dépasser pour des paramètres de mesure (par exemple des temps de réponse maximum).

Le tir est lancé lors de l'étape 220. Le fichier de suivi (par exemple initialisé lors de l'étape 218) est mis à jour lors de l'étape 221, par exemple avec des résultats de mesure. Ces résultats sont analysés lors de l'étape 222 pour déterminer par exemple les consommations de ressources et les résultats fournis par rapport aux requêtes envoyées. Cette analyse peut permettre de déterminer des paramètres de performance de l'infrastructure.

Lors de l'étape 223, les résultats de l'analyse sont comparés aux seuils lus dans le fichier de configuration. Si un ou plusieurs seuils sont dépassés (oui), le tir est arrêté lors de l'étape 224. Une alerte peut alors être émise lors de l'étape 225. Le fichier de suivi peut ensuite être mis à jour lors de l'étape 226.

Une nouvelle charge d'injection est ensuite calculée lors de l'étape 227, en fonction du ou des seuils dépassés. Une alerte est alors émise lors de l'étape 228 pour informer du lancement d'un nouveau tir avec la nouvelle charge. Le processus retourne alors à l'étape 220.

Si aucun seuil n'est dépassé lors de l'étape 223 (non), une étape 229 de détermination d'une marge de progression est mise en oeuvre. Il s'agit de déterminer si l'infrastructure peut supporter une charge d'injection plus exigeante. Si c'est le cas (oui), on retourne à l'étape 224.

Sinon (non), une alerte est émise lors de l'étape 230 avec la limite de performance courante de l'infrastructure déterminée à partir de la charge courante.

Le fichier de suivi est ensuite mis à jour lors de l'étape 231.

Ensuite, une étape 232 de préparation d'un tir de validation est mise en oeuvre pour valider la limite de performance trouvée.

Le tir est alors lancé et une étape 233 de vérification des seuils de performance est exécutée. Si un seuil de performance est dépassé (oui), la limite trouvée n'est pas validée. Le tir est arrêté lors de l'étape 234 et le processus retourne à l'étape 225.

Afin d'éviter un blocage, pour calculer la nouvelle charge (étape 227), est tenu compte du fait que les seuils n'étaient pas dépassés (étape 223), du fait qu'il n'y a pas de marge de progression (étape 229) et du fait que le tir de validation est arrêté (étape 233).

Sinon (non), une étape 235 de détermination de marge de progression est mise en oeuvre. Si une marge de progression est possible (oui), la limite trouvée n'est pas validée et le tir est arrêté lors de l'étape 234.

S'il n'y a pas de marge de progression (non), une étape 236 de préparation d'un tir d'endurance est exécutée.

Le tir est alors lancé et une étape 237 de vérification des seuils de performance est exécutée. Si un seuil de performance est dépassé (oui), la limite trouvée n'est pas validée. Le tir est arrêté lors de l'étape 238 et le processus retourne à l'étape 225.

Sinon (non), une étape 239 de détermination de marge de progression est mise en oeuvre. Si une marge de progression est déterminée (oui), la limite trouvée n'est pas validée et le tir est arrêté lors de l'étape 238.

S'il n'y a pas de marge de progression (non), la limite trouvée est validée.

Une alerte est émise et le fichier de suivi est mis à jour lors d'une étape 240. La recherche est alors arrêtée lors de l'étape 241.

Un dispositif de recherche de limite de performance d'infrastructure informatique selon des modes de réalisation est décrit en référence à la **figure 3****.**

Le dispositif 30 de la figure 3 comporte une unité de mémoire 31 (MEM). Cette unité de mémoire comporte une mémoire vive pour stocker de manière non durable des données de calcul utilisées lors de la mise en oeuvre d'un procédé conforme à l'invention, selon divers modes de réalisation. Par exemple, cette mémoire permet de stocker les résultats de mesure, le fichier de suivi ou autre. L'unité de mémoire comporte par ailleurs une mémoire non volatile (par exemple du type EEPROM) pour stocker par exemple un programme d'ordinateur, selon un mode de réalisation, pour son exécution par un processeur (non représenté) d'une unité de traitement 32 (PROC) du dispositif. Par exemple, l'unité de mémoire peut stocker un fichier de base *« template* », un fichier d'injection, ou un fichier de configuration comme décrit précédemment.

Le dispositif comporte par ailleurs une unité de communication 33 (COM), par exemple pour recevoir des fichiers d'injection et/ou des résultats de mesure de performance, et/ou pour envoyer des requêtes vers une infrastructure informatique à tester et/ou pour émettre des alertes, ou autre.

La présente invention a été décrite et illustrée dans la présente description détaillée en référence aux figures jointes. Toutefois la présente invention ne se limite pas aux formes de réalisation présentées. D'autres variantes et modes de réalisation peuvent être déduits et mis en oeuvre par la personne du métier à la lecture de la présente description et des figures annexées.

Dans les revendications, le terme "comporter" n'exclut pas d'autres éléments ou d'autres étapes. L'article indéfini « un » n'exclut pas le pluriel. Un seul processeur ou plusieurs autres unités peuvent être utilisées pour mettre en oeuvre l'invention. Les différentes caractéristiques présentées et/ou revendiquées peuvent être avantageusement combinées. Leur présence dans la description ou dans des revendications dépendantes différentes, n'exclut pas en effet la possibilité de les combiner. Les signes de référence ne sauraient être compris comme limitant la portée de l'invention.

## Revendications

1. Procédé de recherche de limite de performance d'une chaine applicative mise en oeuvre par une infrastructure informatique (10) comportant une pluralité de dispositifs, ledit procédé comportant les étapes suivantes :
- de premier lancement (202) d'une mesure courante de performance de ladite infrastructure informatique, en fonction d'une valeur courante de paramètres de mesure de performance paramétrables via un fichier de configuration, ledit fichier de configuration fixant, pour chaque dispositif de l'infrastructure et pour chaque ressource des machines de la chaine applicative, un seuil de tolérance,
- de première détermination (203) itérative des résultats de mesure de performance des dispositifs et ressources des machines de la chaine applicative de ladite infrastructure informatique, les résultats de mesure étant relatif à des paramètres de performance d'infrastructure,
- de première comparaison (204) des résultats de mesure à des seuils de tolérance fixés dans le fichier de configuration pour les paramètres de performance d'infrastructure afin de déterminer si un ou plusieurs seuils sont dépassés indiquant que l'infrastructure ne répond pas comme attendu,
- de première détermination (208) d'une marge de modification de ladite valeur courante dudit au moins un paramètre de mesure de performance en fonction des résultats de ladite étape de première comparaison,et,
en fonction de ladite première détermination de ladite marge de modification, les étapes de :
- première modification (209) de ladite valeur courante d'au moins un des paramètres de mesure de performance en fonction d'au moins l'un d'un résultat de ladite première comparaison et de ladite première détermination d'une marge de modification, et
- de réexécution des étapes précédentes avec ladite valeur modifiée,
ou
- de premier arrêt (213) de ladite recherche de limite de performance, ladite limite de performance étant déterminée à partir de ladite valeur courante d'au moins un des paramètres de mesure de performance.

2. Procédé selon l'une des revendications précédentes, comportant en outre, en fonction d'un résultat de ladite étape première de comparaison, une étape d'arrêt (205) de la mesure courante.

3. Procédé selon l'une des revendications précédentes, comportant en outre, en fonction de ladite première détermination de ladite marge de modification, au moins une étape de validation (214-202) de limite de performance.

4. Procédé selon la revendication 3, dans lequel au moins une première étape de validation comporte les étapes suivantes :
- de deuxième lancement d'une mesure courante de performance de ladite infrastructure informatique, en fonction la dernière valeur courante dudit au moins un paramètre de mesure de performance,
- de deuxième détermination itérative d'au moins un résultat de mesure de performance de ladite infrastructure informatique, ledit au moins un résultat de mesure étant relatif à au moins un paramètre de performance d'infrastructure,
- de deuxième comparaison dudit au moins un résultat de mesure à au moins une donnée de tolérance pour ledit paramètre de performance d'infrastructure,
- de deuxième détermination d'une marge de modification de ladite valeur courante dudit au moins un paramètre de mesure de performance, et,
en fonction de ladite première détermination de ladite marge de modification, les étapes:
- de réexécution des étapes selon l'une des revendications 1 à 3, ou
- de deuxième arrêt de ladite recherche de limite de performance, ladite limite de performance étant déterminée à partir de ladite valeur courante validée dudit au moins un paramètre de mesure de performance.

5. Procédé selon la revendication 4, comportant en outre, préalablement à ladite deuxième étape d'arrêt au moins une deuxième étape de validation comportant une réexécution desdites deuxièmes étapes pour tester une endurance de ladite infrastructure informatique.

6. Procédé selon l'une des revendications précédentes, comportant en outre une étape de mise à jour (207, 211) d'un fichier de suivi de ladite recherche de limite de performance en fonction d'au moins l'un des événements suivants :
- la modification d'une valeur courante dudit au moins un paramètre de mesure de performance,
- la détermination d'au moins une valeur courante à valider.

7. Procédé selon l'une des revendications précédentes, comportant en outre une étape d'arrêt de mesure de performance :
- préalablement à une modification d'une valeur courante dudit au moins un paramètre de mesure de performance, et/ou
- suite à un dépassement de tolérance pour ledit paramètre de performance de ladite infrastructure informatique, et/ou
- suite à une détermination d'une marge de modification de ladite valeur courante dudit au moins un paramètre de mesure de performance.

8. Procédé selon l'une des revendications précédentes, dans lequel ledit au moins un paramètre de performance d'infrastructure est relatif à au moins l'un :
d'un résultat d'au moins une requête exécutée par ladite infrastructure informatique en cours de mesure,
d'une utilisation de ressources informatiques.

9. Procédé selon l'une des revendications précédentes, dans lequel ledit paramètre de mesure de performance est un débit d'injection de requêtes à exécuter par ladite infrastructure informatique.

10. Dispositif de surveillance de mesure de performance d'une chaine applicative mise en oeuvre par une infrastructure informatique (30) comportant une pluralité de dispositifs, ledit dispositif de surveillance comportant une unité de traitement (32) configurée pour :
- lancer une mesure courante de performance de ladite infrastructure informatique, en fonction d'une valeur courante de paramètres de mesure de performance paramétrables via un fichier de configuration, ledit fichier de configuration fixant, pour chaque dispositif de l'infrastructure et pour chaque ressource des machines de la chaine applicative, un seuil de tolérance,
- déterminer de manière itérative des résultats de mesure de performance des dispositifs et ressources des machines de la chaine applicative de ladite infrastructure informatique, les résultats de mesure étant relatifs à des paramètres de performance d'infrastructure,
- comparer les résultats de mesure à des seuils de tolérance fixés dans le fichier de configuration pour les paramètre de performance d'infrastructure afin de déterminer si un ou plusieurs seuils sont dépassés indiquant que l'infrastructure ne répond pas comme attendu,
- déterminer une marge de modification de ladite valeur courante dudit au moins un paramètre de mesure de performance en fonction des résultats de ladite comparaison, et, en fonction de ladite première détermination de ladite marge de modification :
- modifier ladite valeur courante d'au moins un des paramètres de mesure de performance en fonction d'au moins l'un d'un résultat de ladite comparaison et de ladite détermination d'une marge de modification, et
- réexécuter les étapes précédentes avec ladite valeur modifiée,
ou
- arrêter ladite recherche de limite de performance, ladite limite de performance étant déterminée à partir de ladite valeur courante d'au moins un des paramètres de mesure de performance.

## Patentansprüche

1. Verfahren zum Suchen nach der Leistungsgrenze einer Anwendungskette, die durch eine IT-Infrastruktur (10) ausgeführt ist, die eine Mehrzahl von Vorrichtungen umfasst, wobei das Verfahren die folgenden Schritte umfasst:
- Das erste Starten (202) einer laufenden Leistungsmessung der IT-Infrastruktur in Abhängigkeit von einem laufenden Wert von Leistungsmessparametern, die über eine Konfigurationsdatei einstellbar sind, wobei die Konfigurationsdatei für jede Vorrichtung der Infrastruktur und für jede Ressource der Maschinen der Anwendungskette eine Toleranzschwelle festlegt,
- Die erste iterative Bestimmung (203) der Leistungsmessergebnisse der Vorrichtungen und Ressourcen der Maschinen der Anwendungskette der IT-Infrastruktur, wobei die Messergebnisse relativ zu Leistungsparametern der Infrastruktur sind,
- Den ersten Vergleich (204) von Messergebnissen mit Toleranzschwellen, die in der Konfigurationsdatei für Leistungsparameter der Infrastruktur festgelegt sind, um zu bestimmen, ob einer oder mehrere Schwellenwerte überschritten werden, was anzeigt, dass die Infrastruktur nicht wie erwartet reagiert,
- Die erste Bestimmung (208) einer Änderungsmarge für den laufenden Wert des zumindest einen Leistungsmessparameters
je nach den Ergebnissen des ersten Vergleichsschritts, und
in Abhängigkeit von der ersten Bestimmung der Änderungsmarge die folgenden Schritte:
- Erste Änderung (209) des laufenden Werts zumindest eines der Leistungsmessparameter in Abhängigkeit von zumindest einem von dem Ergebnis des ersten Vergleichs und von der ersten Bestimmung einer Änderungsmarge, und
- erneute Ausführung der vorherigen Schritte mit dem geänderten Wert,
oder
- erster Stopp (213) der Leistungsgrenzensuche, wobei die Leistungsgrenze aus dem laufenden Wert zumindest eines der Leistungsmessparameter bestimmt wird.

2. Verfahren nach einem beliebigen der vorstehenden Ansprüche, ferner umfassend je nach einem Ergebnis des ersten Vergleichsschritts einen Stoppschritt (205) der laufenden Messung.

3. Verfahren nach einem beliebigen der vorstehenden Ansprüche, ferner umfassend je nach der ersten Bestimmung der Änderungsmarge zumindest einen Schritt mit Bestätigung (214-202) der Leistungsgrenze.

4. Verfahren nach Anspruch 3, wobei zumindest ein erster Bestätigungsschritt die folgenden Schritte beinhaltet:
- Den zweiten Start einer laufenden Leistungsmessung der IT-Infrastruktur in Abhängigkeit vom letzten aktuellen Wert des zumindest einen Leistungsmessparameters,
- Das zweite iterative Bestimmen von zumindest einem Leistungsmessergebnis der IT-Infrastruktur, wobei das zumindest eine Messergebnis relativ zu zumindest einem InfrastrukturLeistungsparameter ist,
- Den zweiten Vergleich des zumindest einen Messergebnisses mit zumindest einem Toleranzwert für den Infrastrukturleistungsparameter,
- Das zweite Bestimmen einer Änderungsmarge für den laufenden Wert des zumindest einen Leistungsmesparameters, und
je nach der ersten Bestimmung des Änderungsspielraums die Schritte:
- Erneute Durchführung der Schritte nach einem beliebigen der vorstehenden Ansprüche 1 bis 3
oder
- ein zweiter Stopp der Leistungsgrenzensuche, wobei die Leistungsgrenze aus dem bestätigten laufenden Wert des zumindest einen Leistungsmessparameters bestimmt wird.

5. Verfahren nach Anspruch 4, ferner umfassend vor dem zweiten Stoppschritt zumindest einen zweiten Bestätigungsschritt, der eine erneute Durchführung der zweiten Schritte beinhaltet, um eine Ausdauer der IT-Infrastruktur zu testen.

6. Verfahren nach einem beliebigen der vorstehenden Ansprüche, ferner umfassend einen Schritt mit Aktualisierung (207, 211) einer Datei zur Überwachung der Leistungsgrenzensuche in Abhängigkeit von zumindest einem der folgenden Ereignisse:
- Die Änderung eines laufenden Werts des zumindest einen Leistungsmessparameters,
- Die Bestimmung zumindest eines zu bestätigenden laufenden Werts.

7. Verfahren nach einem beliebigen der vorstehenden Ansprüche, ferner umfassend einen Stoppschritt zur Leistungsmessung:
- vor einer Änderung eines laufenden Werts des zumindest einen Leistungsmessparameters, und/oder
- nach einer Überschreitung der Toleranz für den Leistungsparameter der IT-Infrastruktur und/oder
- nach einer Bestimmung einer Änderungsmarge für den laufenden Wert des zumindest einen Leistungsmessparameters.

8. Verfahren nach einem beliebigen der vorstehenden Ansprüche, wobei der zumindest eine Infrastrukturleistungsparameter relativ zu zumindest einem der folgenden ist:
ein Ergebnis von zumindest einer Anforderung, die von der IT-Infrastruktur bei laufender Messung ausgeführt wird,
eine Nutzung von IT-Ressourcen.

9. Verfahren nach einem beliebigen der vorstehenden Ansprüche, wobei der Leistungsmessparameter eine Anforderungsinjektionsrate ist, die von der IT-Infrastruktur auszuführen ist.

10. Vorrichtung zum Überwachen der Leistungsmessung einer Anwendungskette, die durch eine IT-Infrastruktur (30) ausgeführt ist, die eine Mehrzahl von Vorrichtungen umfasst, wobei die Überwachungsvorrichtung eine Verarbeitungseinheit (32) umfasst, die so konfiguriert ist, dass sie:
- Eine laufende Leistungsmessung der IT-Infrastruktur in Abhängigkeit von einem laufenden Wert von Leistungsmessparametern startet, die über eine Konfigurationsdatei einstellbar sind, wobei die Konfigurationsdatei für jede Vorrichtung der Infrastruktur und für jede Ressource der Maschinen der Anwendungskette eine Toleranzschwelle festlegt,
- Leistungsmessergebnisse der Vorrichtungen und Ressourcen der Maschinen der Anwendungskette der IT-Infrastruktur iterativ bestimmt, wobei die Messergebnisse relativ zu Leistungsparametern der Infrastruktur sind,
- Messergebnisse mit Toleranzschwellen vergleicht, die in der Konfigurationsdatei für die Infrastrukturleistungsparameter festgelegt sind, um zu bestimmen, ob einer oder mehrere Schwellenwerte überschritten werden, was anzeigt, dass die Infrastruktur nicht wie erwartet reagiert,
- eine Änderungsmarge für den laufenden Wert des zumindest einen Leistungsmessparameters je nach den Ergebnissen des Vergleichs bestimmt, und in Abhängigkeit von der ersten Bestimmung der Änderungsmarge:
- den laufenden Wert von zumindest einem der Leistungsmessparameter in Abhängigkeit von zumindest einem der Ergebnisse des Vergleichs und der Bestimmung einer Änderungsspanne ändert, und
- die vorherigen Schritte mit dem geänderten Wert erneut ausführt,
oder
- die Leistungsgrenzensuche stoppt, wobei die Leistungsgrenze aus dem laufenden Wert zumindest eines der Leistungsmessparameter bestimmt wird.

## Claims

1. A method for searching a performance limit of an application chain implemented by an IT infrastructure (10) including a plurality of devices, said method including the following steps:
- firstly initiating (202) a current measurement of the performance of said IT infrastructure, based on a current value of performance measurement parameters configurable via a configuration file, said configuration file setting, for each infrastructure device and for each resource of the application chain machines, a tolerance threshold,
- firstly determining (203) iteratively the performance measurement results of the devices and resources of the machines of the application chain of said IT infrastructure, the measurement results being relative to infrastructure performance parameters,
- firstly comparing (204) the measurement results with tolerance thresholds set in the configuration file for the infrastructure performance parameters in order to determine whether one or several threshold(s) is/are exceeded indicating that the infrastructure is not responding as expected,
- firstly determining (208) a modification margin of said current value of said at least one performance measurement parameter based on the results of said first comparison step, and
based on said first determination of said modification margin, the steps of:
- firstly modifying (209) said current value of at least one of the performance measurement parameters based on at least one of a result of said first comparison and said first determination of a modification margin, and
- re-performing the previous steps with said modified value
or
- firstly stopping (213) said performance limit search, said performance limit being determined from said current value of at least one of the performance measurement parameters.

2. The method according to any of the preceding claims, further including, based on a result of said first comparison step, a step of stopping (205) the current measurement.

3. The method according to any of the preceding claims, further including, based on said first determination of said modification margin, at least one step of validating (214-202) the performance limit.

4. The method according to claim 3, wherein at least a first validation step includes the following steps:
- secondly initiating a current measurement of the performance of said IT infrastructure, based on the last current value of said at least one performance measurement parameter,
- secondly determining iteratively at least one measurement result of the performance of said IT infrastructure, said at least one measurement result being relative to at least one infrastructure performance parameter,
- secondly comparing said at least one measurement result with at least one tolerance data for said infrastructure performance parameter,
- secondly determining a modification margin of said current value of said at least one performance measurement parameter, and,
based on said first determination of said modification margin, the steps of:
- re-performing the steps according to any of claims 1 to 3,
or
- secondly stopping said performance limit search, said performance limit being determined from said validated current value of said at least one performance measurement parameter.

5. The method according to claim 4, further including, prior to said second stopping step, at least a second validation step including a re-performing of said second steps to test an endurance of said IT infrastructure.

6. The method according to any of the preceding claims, further including a step of updating (207, 211) a tracking file on said performance limit search based on at least one of the following events:
- the modification of a current value of said at least one performance measurement parameter,
- the determination of at least one current value to be validated.

7. The method according to any of the preceding claims, further including a step of stopping the measurement of a performance:
- prior to a modification of a current value of said at least one performance measurement parameter, and/or
- following a tolerance exceeding for said performance parameter of said IT infrastructure, and/or
- following a determination of a modification margin of said current value of said at least one performance measurement parameter.

8. The method according to any of the preceding claims, wherein said at least one infrastructure performance parameter relates to at least one of:
a result of at least one request executed by said IT infrastructure being measured,
a use of computing resources.

9. The method according to any of the preceding claims, wherein said performance measurement parameter is an injection rate of requests to be executed by said IT infrastructure.

10. A device for monitoring a measurement of the performance of an application chain implemented by an IT infrastructure (30) including a plurality of devices, said monitoring device including a processing unit (32) configured to:
- initiate a current measurement of the performance of said IT infrastructure, based on a current value of the performance measurement parameters configurable via a configuration file, said configuration file setting, for each device of the infrastructure and for each resource of the application chain machines, a tolerance threshold,
- iteratively determining the measurement results of the performance of the devices and resources of the application chain machines of said IT infrastructure, the measurement results being relative to infrastructure performance parameters,
- comparing the measurement results with tolerance thresholds set in the configuration file for the infrastructure performance parameter in order to determine whether one or several threshold(s) is/are exceeded indicating that the infrastructure is not responding as expected,
- determining a modification margin of said current value of said at least one performance measurement parameter based on the results of said comparison and, based on said first determination of said modification margin:
- modifying said current value of at least one of the performance measurement parameters based on at least one of a result of said comparison and said determination of a modification margin, and
- re-performing the previous steps with said modified value, or
- stopping said performance limit search, said performance limit being determined from said current value of at least one of the performance measurement parameters.
